**Europäisches Patentamt**

**European Patent Office**

**Office européen des brevets**

(19)

(11) **EP 1 598 955 A2**

(12) # EUROPEAN PATENT APPLICATION

(43) Date of publication:
**23.11.2005 Bulletin 2005/47**

(51) Int Cl.⁷: **H04B 7/06**

(21) Application number: **05010669.9**

(22) Date of filing: **17.05.2005**

| | |
|---|---|
| (84) Designated Contracting States:<br>**AT BE BG CH CY CZ DE DK EE ES FI FR GB GR**<br>**HU IE IS IT LI LT LU MC NL PL PT RO SE SI SK TR**<br>Designated Extension States:<br>**AL BA HR LV MK YU**<br><br>(30) Priority: **17.05.2004 KR 2004034804**<br><br>(71) Applicants:<br>• **SAMSUNG ELECTRONICS CO., LTD.**<br>**Suwon-si, Gyeonggi-do (KR)**<br>• **Korea Advanced Institute of Science and**<br>**Technology (KAIST)**<br>**Daejon (KR)** | (72) Inventors:<br>• **Lee, Kyung-Chun**<br>**Gangwon-do (KR)**<br>• **Chun, Joo-Hwan**<br>**Yuseong-gu, Daejon (KR)**<br>• **Chung, Jae-Hak**<br>**Yeongtong-gu, Suwon-si, Gyeonggi-do (KR)**<br>• **Nam, Seung-Hoon**<br>**Yeongtong-gu, Suwon-si, Gyeonggi-do (KR)**<br><br>(74) Representative: **Grünecker, Kinkeldey,**<br>**Stockmair & Schwanhäusser Anwaltssozietät**<br>**Maximilianstrasse 58**<br>**80538 München (DE)** |

(54) **Beamforming method for a MIMO space division multilplexing system**

(57) A beamforming method in a communication system having a transmitter for transmitting signals to users on a plurality of transmit antennas, and spatially identifying the users and a plurality of receivers for receiving the signals discriminately. A beamforming weight is determined based on channel information received from each of the receivers, based on whether the each receiver uses a single antenna or a plurality of antennas. A transmission signal is multiplied by the beamforming weight and transmitted.

FIG.1

EP 1 598 955 A2

START

COLLECT CHANNEL
INFORMATION FROM TERMINALS — S21

GENERATE WEIGHTS BASED ON THE
NUMBER OF ANTENNAS AND
CHANNEL INFORMATION OF TERMINALS — S22

APPLY WEIGHTS TO TRANSMISSION
SIGNALS FOR TERMINALS — S23

BEAMFORMING — S24

END

FIG.2

**Description**

**BACKGROUND OF THE INVENTION**

1. Field of the Invention

The present invention relates generally to an SDM/MIMO (Space Division Multiplexing/Multiple Input Multiple Output) system, and in particular, to a beamforming method for the SDM/MIMO system.

2. Description of the Related Art

SDM is a scheme for transmitting signals from a base station (BS) to mobile terminals on multiple antennas, while spatially identifying them. This scheme forms a beam for each mobile terminal and cancels interference between mobile terminals, such that a plurality of mobile terminals share one channel without interference. Advantageously, the capacity of a system sharing one channel increases.

A MIMO system uses multiple antennas at the receiver and the transmitter, and increases system capacity in proportion to the number of the antennas used.

Typically, SDM operates under the assumption that each mobile terminal is equipped with a single antenna. In this case, interference between mobile terminals is cancelled by multiplexing a signal for each mobile terminal by a beamforming weight vector. Alternatively, in a MIMO environment, the beamforming weight is determined not as a vector, but as a matrix, along with the increase in number of the antennas of the mobile terminal. The beamforming weight is designed to transmit a signal at a maximum power to a target mobile terminal, and not to other mobile terminals, thereby canceling interference between mobile terminals.

The computation of the beamforming weight requires feedback of channel information from each mobile terminal to the BS. In a TDD (Time Division Duplex) mode, the downlink channel is estimated under the assumption that the uplink and downlink channels are identical. Therefore, SDM is applicable to the downlink and the uplink.

In a real communication environment, however, accurate channel estimation is hard to implement and some errors are involved in the channel estimate as a result of the effects of noise and the difference in gain and phase between multiple antennas. It is a distinctive shortcoming of SDM that because the beamforming weight is determined from the estimated channel and interference is cancelled between mobile terminals using the beamforming weight, the channel estimation error causes a serious deterioration of system performance. That is, a beam cannot be formed in an accurate direction and it is impossible to cancel interference between mobile terminals entirely.

Consequently, a lot of research is being performed on determining a beamforming weight that mitigates the SDM performance degradation in an environment bearing channel estimation error. The research results of beamforming in applying SDM to a system using multiple antennas at a BS and a single antenna at a mobile terminal are well known.

However, research is ongoing to achieve an optimal beamforming weight for SDM in the MIMO environment. To compute the beamforming weight in the SDM/MIMO environment, zero-forcing may be exploited to cancel interference between mobile terminals. In this case, the BS uses a channel estimation fed back from a mobile terminal. Because the channel estimate is not accurate and it is difficult to anticipate beam and null formation with a beamforming weight, interference occurs between mobile terminals. If more SDM users share one channel or a great error is involved in the channel estimate, the impact of interference increases and system performance is seriously degraded. Further, transmit power increases relative to the signal-to-interference ratio of a received signal, resulting in an overall decrease of system efficiency.

**SUMMARY OF THE INVENTION**

Therefore, the present invention has been designed to substantially solve at least the above problems and/or disadvantages and to provide at least the advantages described below. Accordingly, an object of the present invention is to provide a beamforming method for mitigating degradation of SDM performance in an environment bearing channel estimation error.

Another object of the present invention is to provide a beamforming method for computing a beamforming weight, taking into account a single antenna and multiple antennas at a mobile terminal in a conventional SDM/MIMO environment.

A further object of the present invention is to provide a beamforming method for minimizing transmit power and reducing an impact of interference between mobile terminals in proportion to the minimized transmit power.

Still another object of the present invention is to provide a beamforming method for improving system performance by minimizing an average of interference power caused by channel estimation error.

The above and other objects are achieved by providing a beamforming method for an SDM/MIMO communication system.

According to one aspect of the present invention, in a beamforming method in a communication system including a transmitter for transmitting signals to users on a plurality of transmit antennas, the method includes spatially identifying the users and a plurality of receivers for receiving the signals discriminately, and determining a beamforming weight based on channel information received from each of the receivers, taking into account whether the each receiver uses a single antenna or a plurality of antennas. A transmission signal is multiplied by the beamforming weight and transmitted.

## BRIEF DESCRIPTION OF THE DRAWINGS

The above and other objects, features, and advantages of the present invention will become more apparent from the following detailed description when taken in conjunction with the accompanying drawings in which:

FIG. 1 illustrates an SDM/MIMO system to which the present invention is applied;

FIG. 2 is a flowchart illustrating beamforming methods according to the present invention;

FIGs. 3A and 3B are graphs comparing the inventive beamforming with conventional beamforming in terms of SINR (Signal-to-Interference and Noise Ratio); and

FIGs. 4A and 4B are graphs comparing the inventive beamforming with the conventional beamforming in terms of BER (Bit Error Rate).

## DETAILED DESCRIPTION OF THE PREFERRED EMBODIMENTS

Preferred embodiments of the present invention will be described in detail herein below with reference to the accompanying drawings. In the following description, well-known functions or constructions are not described in detail since they would obscure the invention in unnecessary detail.

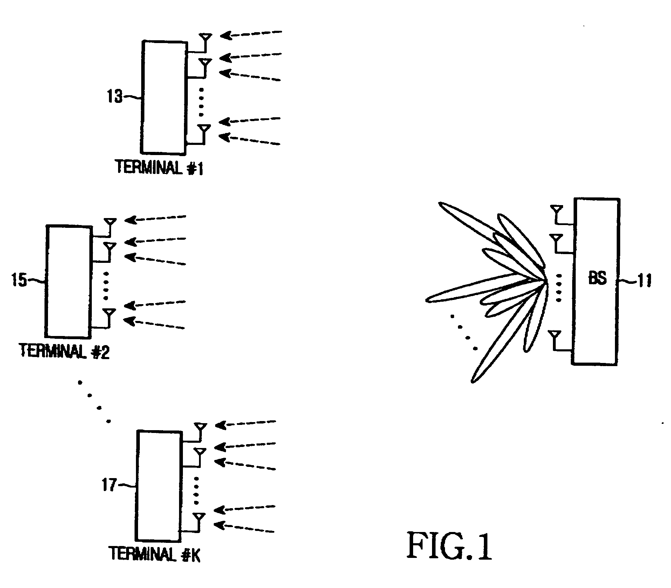

FIG. 1 illustrates an SDM/MIMO system to implement a beamforming method according to an embodiment of the present invention. Referring to FIG. 1, a BS 11 transmits signals to a plurality of mobile terminals 13, 15, and 17 through a plurality of transmit (Tx) antennas. Each of the mobile terminals 13, 15, and 17 are equipped with a plurality of receive (Rx) antennas for receiving the signals in the spatial dimension.

According to a preferred embodiment of the present invention, a communication system comprising K mobile terminals sharing one channel, N antennas at a BS, and $N_{r,k}$ antennas at a $k_{th}$ mobile terminal (i.e. user) is illustrated. $H_k$ is an $N_{r,k} \times N_t$ matrix representing the channel between the BS and the $k_{th}$ mobile terminal. To cancel signal interference between mobile terminals sharing one subchannel on the SDM downlink, it is necessary to multiply a signal by a beamforming matrix $W_k$. A transmission signal s produced by summing the product of each signal $x_k$ and $W_k$ can be determined as shown in Equation (1).

$$s = \sum_{k=1}^{K} W_k x_k$$

$$\ldots \ldots (1)$$

In order to prevent the signal for the $k^{th}$ user from going to other users, $W_k$ must take on the characteristic shown in Equation (2).

$$H_l W_k = 0, \text{ if } l \neq k \tag{2}$$

H is a channel matrix.

To achieve $W_k$, the channel matrix for every user is defined as shown in Equation (3).

$$H = [H_1; H_2; \cdots; H_k] \tag{3}$$

$H_k^c$ is defined as the remaining matrix of H, not including $H_k$. $H_k^c$ is a matrix of size

$$\left(\sum_{l\neq k} N_{r,l}\right) \times N_t .$$

As described above, $W_k$ is designed to prevent transmission of the signal for the $k^{th}$ user to the other users. Therefore, $W_k$ is a basis matrix for the null space of $H_k^c$. That is, one of several basis matrices representing the null space of $H_k^c$ is selected and designated as $W_k$. $W_k$ is of size $N_{r,k} \times \bar{N}_{t,k}$ where

$$\overline{N}_{t,k} = N_t - \sum_{l\neq k} N_{r,l} .$$

When the transmission signal for the $k^{th}$ user be represented by a vector $x_k$ of size $\bar{N}_{t,k} \times 1$, a signal $y_k$ received by the $k^{th}$ user is defined as shown in Equation (4):

$$\mathbf{y}_k = \mathbf{H}_k \mathbf{s} + \mathbf{n}_k$$
$$= \mathbf{H}_k \sum_{l=1}^{K} \mathbf{W}_l \mathbf{x}_l + \mathbf{n}_k$$
$$= \mathbf{H}_k \mathbf{W}_k \mathbf{x}_k + \mathbf{n}_k$$

$$\ldots\ldots (4)$$

where $n_k$ is a vector of size $N_{r,k} \times 1$ representing noise that the Rx antennas have experienced. Every element of the vector $n_k$ is assumed to be the normal distribution probability variable of $(0, \sigma_n^2)$. $H_k W_k$ is defined as $\bar{H}_k$ and thus, $y_k = \bar{H}_k x_k + n_k$. As a result, $\bar{H}_k$ is a real channel for the $k^{th}$ user, and interference from other users using the same channel is perfectly cancelled. Notably, the perfect cancellation of the interference requires the condition that

$$N_t \geq \sum_{k=1}^{K} N_{r,k} .$$

However, there is no perfect channel information in a real communication environment. Although the channel information is collected through channel estimation, the noise causes an error in the channel estimate, leading to the degradation of system performance. The channel estimate of the $k^{th}$ user can be given by Equation (5):

$$\hat{H}_k = H_k + \Delta H_k \qquad (5)$$

where $H_k$ is a real channel matrix, $\hat{H}_k$ is the channel estimate, and $\Delta H_k$ is the channel estimation error. Every element of $\Delta H_k$ is assumed to be independent and a probability variable with distribution $(0, \sigma_n^2)$.

Having no knowledge of $H_k$, the transmitter determines a weight using $\hat{H}_k$. Therefore, the weight $\hat{W}_k$ is derived from $\hat{H}_k$ in the real system. That is, the condition is satisfied that $\hat{H}_l \hat{W}_k = 0$, if $l \neq k$. Using $\hat{W}_k$, the transmission signal is expressed as shown in Equation (6):

$$\hat{s} = \sum_{k=1}^{K} \hat{W}_k x_k$$

$$\ldots \ldots (6)$$

and a signal received at the $k^{th}$ user is defined as shown in Equation (7).

$$y_k = H_k \hat{s} + n_k$$
$$= H_k \sum_{l=1}^{K} \hat{W}_l x_l + n_k$$
$$= H_k \hat{W}_k x_k + \sum_{l \neq k} H_k \hat{W}_l x_l + n_k$$

$$\ldots \ldots (7)$$

Because $\underline{H_k \hat{W}_l \neq 0 \text{ for } k \neq l}$, an interference signal from the other users

$$\sum_{l \neq k} H_k \hat{W}_l x_l$$

is received at the $k^{th}$ user. The interference affects system performance, and thus it is necessary to reduce the effects of the interference.

In the beamforming method according to an embodiment of the present invention, a minimum transmit power weight is used to reduce the effects of channel information error in a system combining MIMO with SDM.

An analysis of the effects of channel estimation error reveals that the power of signal interference is proportional to transmit power. That is, strong power for a particular user interferes with signals from other users. Therefore, one method for reducing the signal interference is to transmit a signal to each user at minimum power. In order to reduce the transmit power without affecting the received signal, the transmission signal is defined as shown in Equation (8):

$$\tilde{s} = \hat{s} + a$$

$$\ldots \ldots (8)$$

where a is a vector that is orthogonal to the channel of every user. The addition of a to the transmission signal has no influence on the received signal in an environment having accurate channel information. Therefore, the use of a minimizes the transmit power without affecting the received signal. Because a must be orthogonal to the channel of every user (channel estimate in a real environment), a is defined as shown in Equation (9):

$$a = N\alpha \qquad (9)$$

where N is an orthogonal basis for the zero space of $\hat{H} = [\hat{H}_1; \hat{H}_2; \ldots; \hat{H}_K;]$ and $\alpha$ is an arbitrary vector to represent a. Therefore, the transmission signal is expressed as shown in Equation (10).

$$\tilde{s} = \hat{s} + \mathbf{N}\alpha$$

$$\ldots\ldots (10)$$

To minimize the power of the transmission signal $\tilde{s}$, a is computed as shown in Equation (11).

$$\alpha = \arg\min_{\alpha'} \left\| \hat{s} + \mathbf{N}\alpha' \right\|^2$$

$$\ldots\ldots (11)$$

Because a can be defined as the least square of $\hat{s} = -N\alpha$,

$$\alpha = -\mathbf{N}^\dagger \hat{s} \qquad\qquad (12)$$

where $(\cdot)^\dagger$ is a pseudo-inverse.

By substituting Equation (12) into Equation (10), the transmission signal is given as shown in Equation (13).

$$\tilde{s} = \hat{s} - \mathbf{N}\mathbf{N}^\dagger \hat{s}$$
$$= (\mathbf{I} - \mathbf{N}\mathbf{N}^\dagger)\hat{s}$$
$$= \sum_{k=1}^{K} (\mathbf{I} - \mathbf{N}\mathbf{N}^\dagger)\hat{W}_k \mathbf{x}_k$$

$$\ldots\ldots (13)$$

I is an identity matrix with the appropriate size.

The transmission signal has minimum transmit power. Its symbol vector $x_k$ is multiplied by the beamforming weight shown in Equation (14).

$$\tilde{W}_{k,1} = (\mathbf{I} - \mathbf{N}\mathbf{N}^\dagger)\hat{W}_k$$

$$\ldots\ldots (14)$$

The above weight minimizes the transmit power, thereby reducing the power of the signal interference.

In a beamforming method according to another embodiment of the present invention, a minimum interference power weight is used to reduce the effects of channel information error in a system combining MIMO with SDM.

The channel estimation model is partially modified to minimize the signal interference power caused by the channel estimation error. It is assumed that the channel estimation error $\Delta H_k$ is independent of $H_k$. However, $H_k$ is not independent of $\Delta H_k$ because $H_k = \hat{H}_k + \Delta H_k$. Thus, in an environment where the power of the channel estimation error much higher than the channel power, that is, when $\|H_k\|^2 >> \|\Delta H_k\|^2$, an approximation can be achieved such that $\Delta H_k$ is independent of $H_k$. Therefore, the assumption that $\Delta H_k$ is independent of $H_k$ is held while deriving the minimum interference power weight.

To investigate the effects of the transmission signal for the k[th] user on other users, the signal of the k[th] user received at every user is defined as a vector shown in Equation (15):

$$y_{k,all} = H\overset{\wedge}{W}_k x_k \qquad (15)$$

where $y_{k,all}$ is a

$$\sum_{k=1}^{K} N_{r,k} \times 1$$

vector, i.e., a value received at every user for the signal of the $k^{th}$ user. In an environment where perfect channel information is achieved and there is no interference between users, $y_{k,all}$ is zero for all users except for the $k^{th}$ user.

Assuming that $a_k$ is added to the $k^{th}$ user signal (i.e. $W_k x_k + a_k$) for transmission, $y_{k,all}$ is defined as shown in Equation (16):

$$\begin{aligned} y_{k,all} &= H(\hat{W}_k x_k + a_k) \\ &= (\hat{H} - \Delta H)(\hat{W}_k x_k + a_k) \\ &= \hat{H}\hat{W}_k x_k + \hat{H}a_k - \Delta H \hat{W}_k x_k - \Delta H a_k \end{aligned}$$

$$\cdots (16)$$

where $\hat{H}\hat{W}_k x_k$ is non-zero for only the $k^{th}$ user with perfect interference cancellation, and $\hat{H}a_k - \Delta H\hat{W}_k x_k - \Delta H a_k$ is the interference caused by the $k^{th}$ user. Thus, $a_k$ that minimizes the average power of this term must be found. An optimal value of $a_k$ is computed as shown in Equation (17).

$$\ddot{a}_k = \arg\min_{a_k} E\left\| \hat{H}a_k - \Delta H\hat{W}_k x_k - \Delta H a_k \right\|^2$$

$$\cdots (17)$$

$J^2 = \|\hat{H}a_k - \Delta H\hat{W}_k x_k - \Delta H a_k\|^2$ must be minimized. This is developed as shown in Equation (18):

$$\begin{aligned} J^2 &= a_k^H \hat{H}\hat{H}^H \hat{H} a_k + x_k^H \hat{W}_k^H \Delta H^H \Delta H \hat{W}_k x_k + a_k^H \Delta H^H \Delta H a_k \\ &+ 2Re\{-a_k^H \hat{H}^H \Delta H \hat{W}_k x_k - a_k^H \hat{H}^H \Delta H a_k + x_k^H \hat{W}_k^H \Delta H^H \Delta H a_k\} \end{aligned} \qquad (18)$$

where $^{(\cdot)H}$ is a Hermitian transpose. Under the assumption that $\Delta H_k$ is independent of $H_k$ and $E[\Delta H^H \Delta H] = N_{r,all}\sigma^2 I$

$$\left( N_{r,all} = \sum_{k=1}^{K} N_{r,k} \right)$$

to achieve the expected value of $J^2$, Equation (19) is determined.

$$E[J^2] = a_k^H \hat{H}^H \hat{H} a_k + x_k^H \hat{W}_k^H E[\Delta H^H \Delta H] \hat{W}_k x_k + a_k^H E[\Delta H^H \Delta H] a_k$$
$$+ 2\operatorname{Re}\{-a_k^H E[\hat{H}^H \Delta H] \hat{W}_k x_k - a_k^H E[\hat{H}^H \Delta H] a_k + x_k^H \hat{W}_k^H E[\Delta H^H \Delta H] a_k\}$$
$$= a_k^H \hat{H}^H \hat{H} a_k + N_{r,all} \sigma^2 x_k^H \hat{W}_k^H \hat{W}_k x_k + N_{r,all} \sigma^2 a_k^H a_k + 2\operatorname{Re}\{N_{r,all} \sigma^2 x_k^H \hat{W}_k^H a_k\}$$

$$\dots \dots (19)$$

To achieve $a_k$ that minimizes $E[J^2]$, $E[J^2]$ is differentiated with respect to $a_k$ and the right-hand side is put to zero. Thus,

$$\hat{H}^H \hat{H} a_k + N_{r,all}\sigma^2 a_k + N_{r,all}\sigma^2 \hat{W}_k x_k = 0 ,\qquad (20)$$

which is re-arranged with respect to $a_k$ as follows, thereby achieving an optimal solution as shown in Equation (21).

$$a_k = -(\frac{1}{N_{r,all}\sigma^2}\hat{H}^H\hat{H}+I)^{-1}\hat{W}_k x_k \qquad (21)$$

Based on Equation (21), the transmission signal for the $k^{th}$ user is expressed as shown in Equation (22).

$$s_k = \dot{W}_k x_k + a_k$$
$$= \{I - (\frac{1}{N_{r,all}\sigma^2}\hat{H}^H\hat{H} + I)^{-1}\}\dot{W}_k x_k$$

$$\dots \dots (22)$$

Thus, a minimum interference power weight for the $k^{th}$ user is determined by Equation (23).

$$\tilde{W}_{k,2} = \{I - (\frac{1}{N_{r,all}\sigma^2}\hat{H}^H\hat{H} + I)^{-1}\}\hat{W}_k$$

$$\dots \dots (23)$$

The use of the minimum interference power weight reduces the effects of signal interference between users in a channel estimation error-having environment.

While the beamforming weights are derived for the downlink in the above-described beamforming methods, the same can be applied to the uplink with some slight modification. The same reception power or SINR can be maintained using low transmit power by modifying Equation (14) and Equation (23), thereby decreasing the norms of the weight matrices.

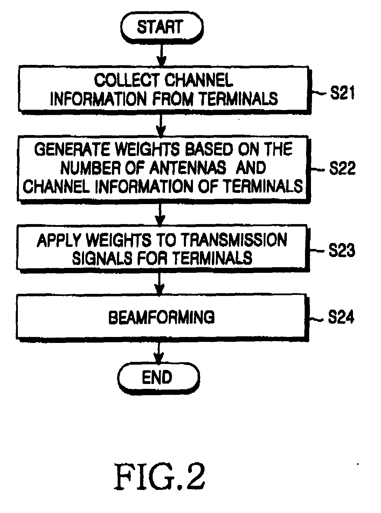

FIG. 2 is a flowchart illustrating the beamforming methods according to the present invention. Referring to FIG. 2, a BS first collects channel information from feedback signals received from a plurality of mobile terminals in step S21 and generates a beamforming weight for each of the mobile terminals based on the number of antennas and channel information of the mobile terminal in step S22. The BS applies the beamforming weight to a transmission signal for the mobile terminal in step S23 and forms a beam for the mobile terminals in step S24.

The beamforming weight designed to minimize the transmit power of the signal or minimize the average value of interference signal power caused by a channel estimation error.

The beamforming method of the present invention and a conventional zero-forcing weight deciding method were simulated in terms of performance.

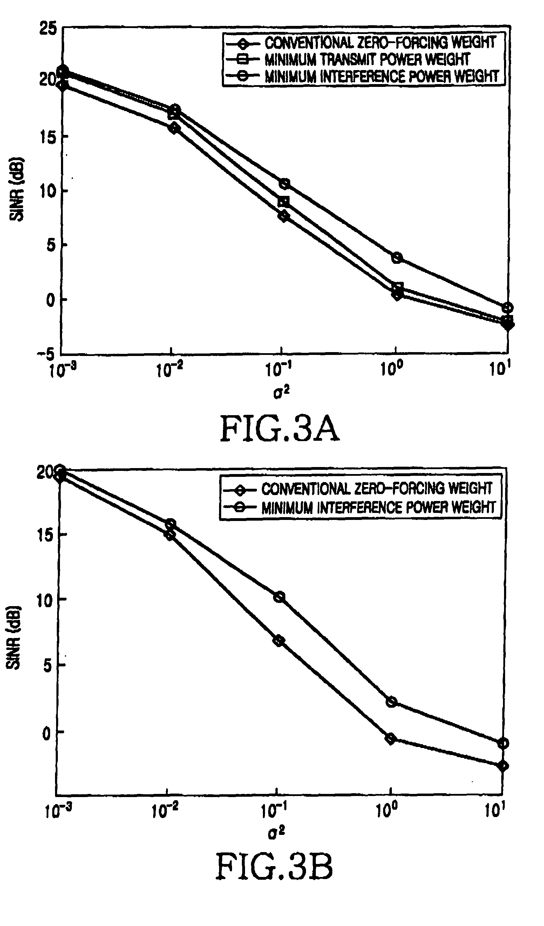

For example, FIGs. 3A and 3B are graphs comparing the inventive beamforming methods with the conventional beamforming method in terms of performance. Referring to FIG. 3A, when K=3, $N_t$=10, and $N_{r,k}$=3, changes in SINR are shown with respect to the standard deviation of a channel estimation error, $\sigma^2$. Here, SNR (Signal to Noise Ratio)=20dB. SNR is defined as the ratio of average transmit power to received noise power $\sigma_n^2$ per user. The conventional zero-forcing weight deciding method uses an orthogonal matrix as a weight, which was designed simply to be orthogonal to other user channels without any regard to channel estimation error.

As illustrated in FIG. 3A, the beamforming methods according to the first and second embodiments of the present invention offer better SINR performance than the conventional beamforming method. More specifically, the beamforming method using a minimum interference power weight according to the second embodiment of the present invention produces the best performance in an environment having a large channel estimation error.

FIG. 3B illustrates the simulation result when K=4, $N_t$=8, and $N_{r,k}$=2. Similarly to the simulation result illustrated in FIG. 3A, the inventive beamforming methods have better performances.

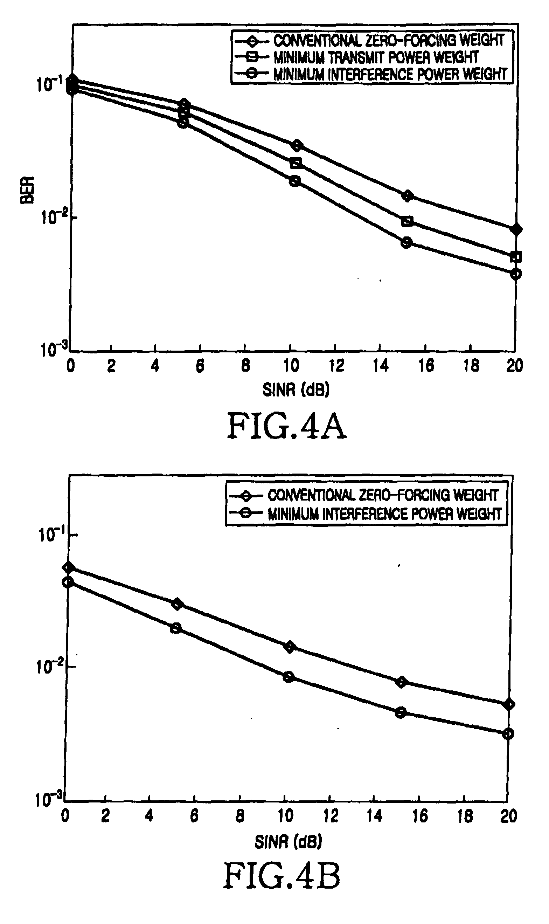

FIGs. 4A and 4B are graphs comparing the inventive beamforming with the conventional beamforming in terms of BER performance with respect to SNR. In the simulations, $\sigma^2$ is fixed to 0.025, every element of $x_k$ is a QPSK (Quadrature Phase Shift Keying) symbol, and ML (Maximum Likelihood) detection is used at a receiver. In FIG. 4A, K=3, $N_t$=10, and $N_{r,k}$=3, and in FIG. 4B, K=4, $N_t$=8, and $N_{r,k}$=2. As noted from FIGs. 4A and 4B, the beamforming methods according to the first and second embodiment of the present invention have better performance than the conventional beamforming method. More specifically, the beamforming using a minimum interference power weight according to the second embodiment of the present invention produces the best performance.

As described above, the beamforming methods according to the present invention minimize channel estimation errors, thereby preventing the degradation of system performance. Also, the same SINR can be maintained with a low transmit power.

While the present invention has been shown and described with reference to certain preferred embodiments thereof, it will be understood by those skilled in the art that various changes in form and details may be made therein without departing from the spirit and scope of the present invention as defined by the appended claims.

## Claims

1. A beamforming method for use in a communication system having a transmitter for transmitting signals to users on a plurality of transmit antennas, and spatially identifying the users, and a plurality of receivers for selectively receiving the signals, comprising the steps of:

   determining a beamforming weight based on channel information received from each of the plurality of receivers, based on whether the each of the plurality of receivers uses a single antenna or a plurality of antennas;
   multiplying a transmission signal by the beamforming weight; and
   transmitting [a product of] the multiplied transmission signal [and beamforming weight].

2. The beamforming method of claim 1, wherein the step of determining the beamforming weight is performed to minimize a power of the transmission signal.

3. The beamforming method of claim 1, wherein the step of determining the beamforming weight comprises the step of computing a beamforming weight for a $k^{th}$ receiver by

$$\tilde{\mathbf{W}}_{k,1} = (\mathbf{I} - \mathbf{N}\mathbf{N}^{\dagger})\dot{\mathbf{W}}_k$$

where I is an identity matrix with the appropriate size and N is an orthogonal basis for the zero space of an estimation matrix including channel estimates of K receivers, $H = [H_1; H_2; ...; H_K]$.

4. The beamforming method of claim 1, wherein the beamforming weight is designed such that an average power of an interference signal caused by channel estimation errors is minimized.

5. The beamforming method of claim 1, wherein the beamforming weight is computed by

$$\widetilde{W}_{k,2} = \{I - (\frac{1}{N_{r,all}\sigma^2}\hat{H}^H\hat{H} + I)^{-1}\}\hat{W}_k$$

where I is an identity matrix with the appropriate size, $N_{r,all}$ is the number of antennas in the each receiver, $\sigma^2$ is a standard deviation of channel estimation errors, and H is a matrix made up of channel matrices of all receivers.

6. A beamforming method in a communication system utilizing space division multiplexing (SDM) and multiple-input and multiple-output (MIMO), the method comprising the steps of:

determining a beamforming weight for a terminal based on a number of antennas of the terminal and channel information received from the terminal;
generating a transmission signal for the terminal by [applying] using the beamforming weight; and
transmitting the transmission signal [in a beam space].

7. The beamforming method of claim 6, wherein the beamforming weight is designed such that the power of the transmission signal is minimized.

8. The beamforming method of claim 7, wherein the beamforming weight is computed by

$$\widetilde{W}_{k,1} = (I - NN^\dagger)\dot{W}_k$$

Where I is an identity matrix with the appropriate size and N is an orthogonal basis for the zero space of an estimation matrix including channel estimates of K receivers, $H = [H_1;H_2;...;H_K;]$.

9. The beamforming method of claim 8, wherein the beamforming weight is designed such that an average power of an interference signal caused by channel estimation errors is minimized.

10. The beamforming method of claim 9, wherein the beamforming weight is computed by

$$\widetilde{W}_{k,2} = \{I - (\frac{1}{N_{r,all}\sigma^2}\hat{H}^H\hat{H} + I)^{-1}\}\hat{W}_k$$

where I is an identity matrix with the appropriate size, $N_{r,all}$ is the number of antennas in the receiver, $\sigma^2$ is a standard deviation of channel estimation errors, and H is a matrix made up of channel matrices of all receivers.

FIG.1

START

COLLECT CHANNEL
INFORMATION FROM TERMINALS — S21

GENERATE WEIGHTS BASED ON THE
NUMBER OF ANTENNAS AND
CHANNEL INFORMATION OF TERMINALS — S22

APPLY WEIGHTS TO TRANSMISSION
SIGNALS FOR TERMINALS — S23

BEAMFORMING — S24

END

FIG.2

FIG.3A

FIG.3B

FIG.4A

FIG.4B